# EUROPÄISCHE PATENTANMELDUNG

(11) **EP 1 150 000 A2**
(43) Veröffentlichungstag der Anmeldung: **31.10.2001**
(21) Anmeldenummer: 01106229.6
(22) Anmeldetag: 14.03.2001
(51) Int. Cl.: F02M 35/10, F02M 69/46

(54) **Gemischbildungsanordnung für eine Brennkraftmaschine**

(30) Priorität: 27.04.2000 DE 10020616
(71) Anmelder: Pierburg Aktiengesellschaft, 41460 Neuss (DE)
(72) Erfinder: Kühnel, Hans-Ulrich, 41239 Mönchengladbach (DE); Langner, Frank, 52146 Würselen (DE)
(74) Vertreter: Ter Smitten, Hans

(57) **Zusammenfassung**

Gemischbildungsanordnung für eine Brennkraftmaschine, mit einer Kraftstoffverteilerleiste aus Metall die Kraftstoff unter Hochdruck zu einzelnen Einspritzdüsen führt und Luftansaugkanälen, die von einem Saugrohr zu einem Zylinderkopf führen, zur Versorgung der Brennkraftmaschine mit Brennluft, wobei die Kraftstoffverteilerleiste (2) aus Metall in einem Spritzgußformteil (3) aus Kunststoff angeordnet ist, wobei in dem Spritzgußformteil (3) die Luftansaugkanäle (7) ausgeformt sind.

## Beschreibung

Die Erfindung betrifft eine Gemischbildungsanordnung für eine Brennkraftmaschine, mit einer Kraftstoffverteilerleiste aus Metall, die Kraftstoff unter Hochdruck zu einzelnen Einspritzdüsen führt und Luftansaugkanälen, die von einem Saugrohr zu einem Zylinderkopf führen, zur Versorgung der Brennkraftmaschine mit Brennluft.

Derartige Gemischbildungsanordnungen sind hinlänglich bekannt. So weist ein Saugrohr einzelne Luftansaugkanäle auf, die an den Zylinderkopf angeflanscht werden. Außerdem wird auf dem Zylinderkopf eine Kraftstoffverteilerleiste mit Einspritzdüsen befestigt, die den Kraftstoff in eine Brennkammer führen. Diese Gemischbildungsanordnung ist konstruktiv aufwendig, da jeweils das Saugrohr mit den Luftansaugkanälen sowie die Kraftstoffverteilerleiste an den jeweiligen Zylinderkopf angepaßt werden müssen.

Es ist daher Aufgabe der Erfindung, eine Gemischbildungsanordnung zu schaffen, die den oben genannten Nachteil vermeidet.

Diese Aufgabe wird dadurch gelöst, daß die Kraftstoffverteilerleiste aus Metall in einem Spritzgußformteil aus Kunststoff angeordnet, wobei in dem Spritzgußformteil die Luftansaugkanäle ausgeformt sind.

Auf diese Weise wird eine Gemischbildungsanordnung als Moduleinheit ausgebildet, die einfach an den jeweiligen Zylinderkopf der Brennkraftmaschine anzupassen ist. Auf besonders einfache Weise kann bei dieser Anordnung eine Beeinflussung der Luftströmung in den Ansaugkanälen dadurch vorgenommen werden, daß die Luftansaugkanäle Tumble- oder Drallklappen aufweisen. Um die Haftung der Kraftstoffverteilerleiste in dem Spritzgußformteil zu verbessern, kann die Kraftstoffverteilerleiste eine Verklammerungsstruktur, wie zum Beispiel eine Aufrauhung aufweisen.

Ein Ausführungsbeispiel der Erfindung ist in der Zeichnung dargestellt und wird nachfolgend beschrieben.

Die Zeichnung zeigt:
- Figur 1:: einen Längsschnitt durch die erfindungsgemäße Gemischbildungsanordnung, und
- Figur 2:: einen Querschnitt durch die erfindungsgemäße Gemischbildungsanordnung .

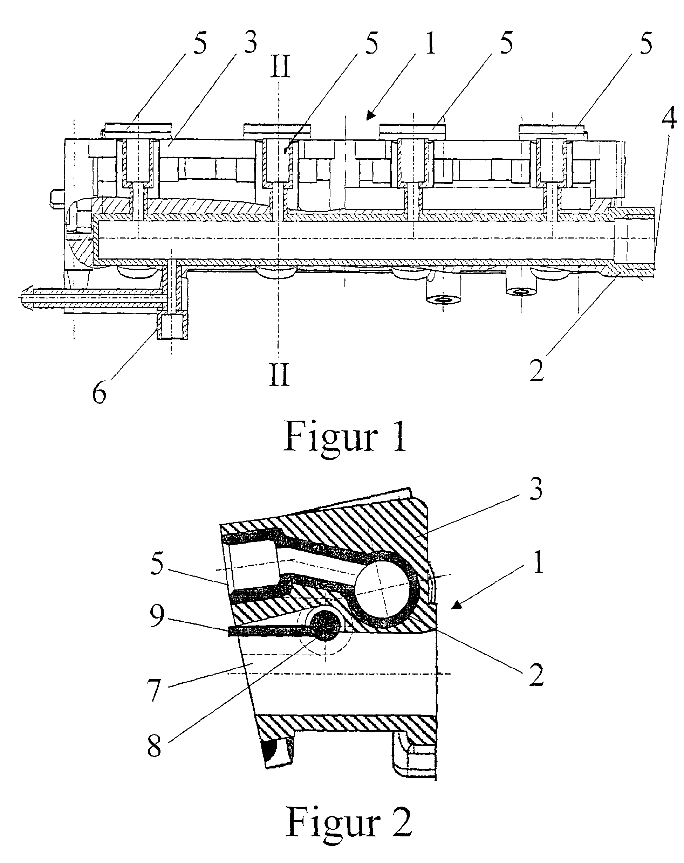

Figur 1 zeigt die erfindungsgemäße Gemischbildungsanordnung 1 im Längsschnitt, wobei deutlich die Anordnung der Kraftstoffverteilerleiste 2 im Spritzgußformteil 3 zu erkennen ist. Die Kraftstoffverteilerleiste 2 weist auf bekannte Weise eine Eingangsöffnung 4 auf, durch die der Kraftstoff unter Hochdruck zu den Ausgangsöffnungen 5, an die sich nicht dargestellte Einspritzdüsen anschließen, geführt wird. Desweiteren weist die Kraftstoffverteilerleiste 2 noch eine Rücklaufvorrichtung 6 auf. Im vorliegenden Fall ist die Kraftstoffverteilerleiste 2 aus einem Chrom-Nickel-Stahl (X 12 Cr Ni 17 7) hergestellt, wobei die Oberfläche derart aufgerauht ist, daß sich eine verbesserte Haftung der Kraftstoffverteilerleiste 2 im Spritzgußformteil 3 ergibt.

Figur 2 zeigt einen Querschnitt durch die erfindungsgemäße Gemischbildungsanordnung entlang der Linie II-II in Figur 1. Dementsprechend weist das Spritzgußformteil 3 aus Kunststoff Luftansaugkanäle 7 auf, die in montiertem Zustand der Gemischbildungsanordnung 1 ein nicht dargestelltes Ansaugrohr mit den Luftansaugkanälen der Brennkraftmaschine verbindet. Wie im vorliegenden Beispiel dargestellt, ist die Gemischbildungsanordnung 1 auf einfache Weise mit einer Schaltwelle 8 und darauf montierten oder integrierten Tumbleklappen, die die Luftansaugung auf bekannte Weise beeinflussen, versehen. E sollte deutlich sein, daß anstatt der dargestellten Tumbleklappen 9 auch Drallklappen eingesetzt werden können.

## Patentansprüche

1. Gemischbildungsanordnung für eine Brennkraftmaschine, mit einer Kraftstoffverteilerleiste aus Metall die Kraftstoff unter Hochdruck zu einzelnen Einspritzdüsen führt und Luftansaugkanälen, die von einem Saugrohr zu einem Zylinderkopf führen, zur Versorgung der Brennkraftmaschine mit Brennluft, **dadurch gekennzeichnet, daß** die Kraftstoffverteilerleiste (2) aus Metall in einem Spritzgußformteil (3) aus Kunststoff angeordnet ist, wobei in dem Spritzgußformteil (3) die Luftansaugkanäle (7) ausgeformt sind.

2. Gemischbildungsanordnung nach Anspruch 1, **dadurch gekennzeichnet, daß** die Luftansaugkanäle (7) Tumple- oder Drallklappen (9) aufweisen.

3. Gemischbildungsanordnung nach Anspruch 1 oder 2, **dadurch gekennzeichnet, daß** die Kraftstoffverteilerleiste (2) eine Verklammerungsstruktur aufweist, wie zum Beispiel eine Aufrauhung, für eine verbesserte Haftung der Kraftstoffverteilerleiste (2) in dem Spritzgußformteil (3).
